# EUROPÄISCHE PATENTSCHRIFT

(11) **EP 0 629 888 B1**
(45) Veröffentlichungstag und Bekanntmachung des Hinweises auf die Patenterteilung: **23.08.2000**
(21) Anmeldenummer: 94109391.6
(22) Anmeldetag: 17.06.1994
(51) Int. Cl.: G02B 6/42

(54) **Vorrichtung zur justagefreien Ankopplung einer Mehrzahl von Lichtwellenleitern an ein Laserarray**
Device for coupling a plurality of lightguides to a laser array without adjustment
Dispositif pour le couplage d'une pluralité de guides d'ondes optiques avec un réseau à laser sans ajustage

(30) Priorität: 18.06.1993 DE 4320194
(43) Veröffentlichungstag der Anmeldung: 21.12.1994
(73) Patentinhaber: ALCATEL, 75008 Paris (FR)
(72) Erfinder: Hehmann, Jörg, D-70499 Stuttgart (DE)
(74) Vertreter: Schätzle, Albin, Dipl.-Phys.

(56) Entgegenhaltungen:
- EP-A- 0 331 334
- EP-A- 0 466 134
- EP-A- 0 529 947
- US-A- 4 812 002

## Beschreibung

Die Erfindung betrifft eine Vorrichtung zur genau justierten Ankopplung einer Mehrzahl von Lichtwellenleitern an ein Laserarray.

Bei den derzeit benutzten Verfahren zur Ankopplung von Lichtwellenleitern an ein Laserarray wird das Ende eines jeden Lichtwellenleiters einzeln zum Laserarray justiert. Das wird dadurch bewerkstelligt, daß der Lichtwellenleiter in der V-förmigen Nut eines Trägers liegt, wodurch die horizontale und vertikale Lage des Lichtwellenleiters genau definiert ist. Durch Verschieben des Lichtwellenleiter-Endes in der Nut in Richtung zum Laserarray hin, wird seine axiale Lage justiert. Dies geschieht mit Hilfe eines Mikroskops, mit dessen Hilfe überprüft wird, ob das Lichtwellenleiter-Ende die gewünschte Endlage erreicht hat.

Das bekannte Verfahren ist sehr aufwendig, wenn eine Mehrzahl von Lichtwellenleitern mit einem Laserarray gekoppelt werden sollen.

Aus der EP-A1-0 529 947 ist eine Vorrichtung zur genau justierten Ankopplung einer Mehrzahl von Lichtwellenleitern an einen Laserarray bekannt, die eine ebene Platte, ein an einem Kopfende der Platte befestigtes Kopfstück und einen auf die ebene Platte aufzusetzenden ebenen Deckel umfaßt. Die genannten Teile werden mit Hilfe von Kugeln zueinander ausgerichtet, die in kegelstumpfförmige Vertiefungen eingesetzt sind. Die Platte und der Deckel sind mit V-Nuten zur Aufnahme optischer Fasern versehen. Der Endabschnitt der optischen Fasern wird entmantelt, so daß dort die rohe Faser freiliegt. Die Abschnitte der V-Nuten, die die Rohe Faser aufnehmen, haben einen kleineren Querschnitt als die Abschnitte, die die Fasern mit Mantel aufnehmen.

Das der Erfindung zugrunde liegende technische Problem besteht deshalb darin, eine Vorrichtung zu schaffen, mit welcher das Ankoppeln einer Mehrzahl von Lichtwellenleitern an ein Laserarray vereinfacht wird.

Dieses technische Problem ist erfindungsgemäß gelöst, durch eine ebene Platte mit einer Mehrzahl von V-Nuten und einen ebenen Deckel mit der gleichen Anzahl von V-Nuten, welche derart in der Platte und im Deckel angeordnet sind, daß sie nach deren Zusammenfügen rhombusförmige Kanäle bilden, bei denen die dem Laserarray zugewandten Enden der Nuten mit einem Anschlag sowie Platte und Deckel mit Mitteln zur exakten Justage derselben zueinander versehen sind.

Mit der erfindungsgemäßen Vorrichtung ist das Ankoppeln einer Mehrzahl von Lichtwellenleitern an ein Laserarray sehr stark vereinfacht. Nach dem Zusammenbau der Vorrichtung und der Befestigung des Laserarrays darauf, sind alle Voraussetzungen für die justierte Ankopplung der Lichtwellenleiter an das Laserarray gegeben. Es ist dann lediglich noch erforderlich, die am Ende spitz angeschliffenen Lichtwellenleiter bis zum Anschlag in die rhombusförmigen Kanäle einzuschieben und dort zu fixieren. Die Justage der einzelnen Lichtwellenleiter ist nicht mehr erforderlich.

Vorteilhafte Einzelheiten der Erfindung sind in den Ansprüchen 2 bis 4 enthalten. Sie ist nachstehend anhand der Figuren 1 bis 4 erläutert.

Es zeigen:
- Fig. 1: den Längssschnitt durch ein Ausführungsbeispiel der erfindungsgemäßen Vorrichtung,
- Fig. 2: die Draufsicht auf die Vorrichtung gemäß Fig. 1 nach Entfernung des Deckels,
- Fig. 3: einen vergrößerten Ausschnitt aus der Vorrichtung gemäß Fig. 1 und
- Fig. 4: den Querschnitt durch die Vorrichtung entlang der Linie AB in Fig. 3.

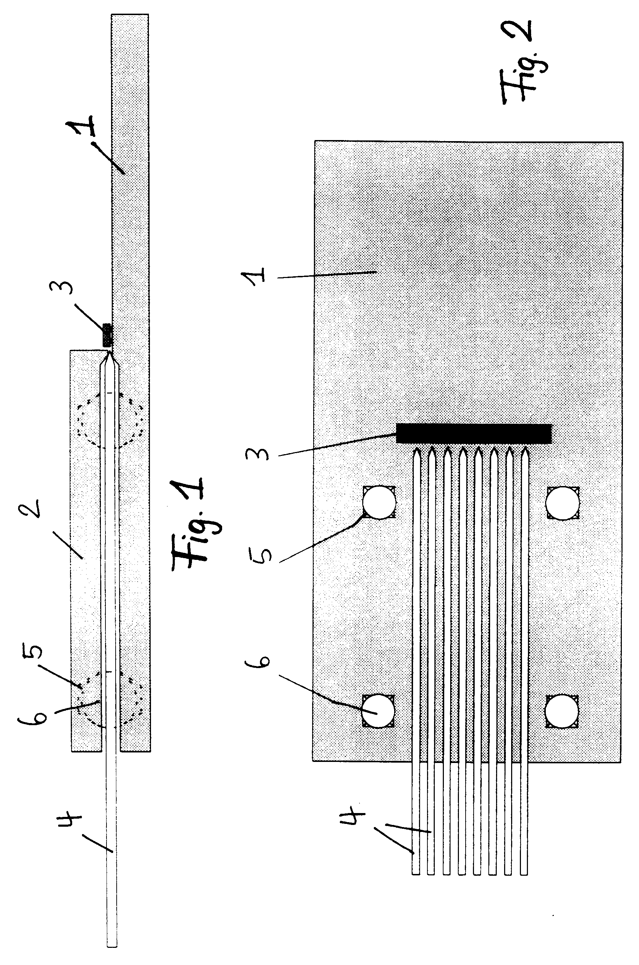

In Fig. 1 ist ein Ausführungsbeispiel der Vorrichtung zu erkennen, welche aus der Platte 1 und dem Deckel 2 besteht. Das Laserarray 3 ist auf der Platte 1 montiert, an welches die Lichtwellenleiter 4 angekoppelt werden sollen. Die Lichtwellenleiter 4 liegen - wie weiter unten noch genau erläutert wird - in einem Kanal mit rhombusförmigem Querschnitt, welcher von zwei jeweils V-förmigen Nuten in Platte 1 und Deckel 2 gebildet ist. In Fig. 1 sind auch die kegelstumpfförmigen Vertiefungen 5 in der Platte 1 und dem Deckel 2 mit den darin angeordneten Kugeln 6 angedeutet, durch welche Platte 1 und Deckel 2 exakt zueinander justiert sind.

In Fig. 2 ist - ohne den Deckel 2 - zu erkennen, wie die Lichtwellenleiter 4 parallel zueinander in den - nicht erkennbaren - V-förmigen Nuten in der Platte 1 liegen und ihre angespitzten Enden in einem definierten Abstand zum Laserarray 3 enden. Dieser Abstand entspricht der Brennweite der linsenförmig abgerundeten Spitze des Lichtwellenleiterendes.

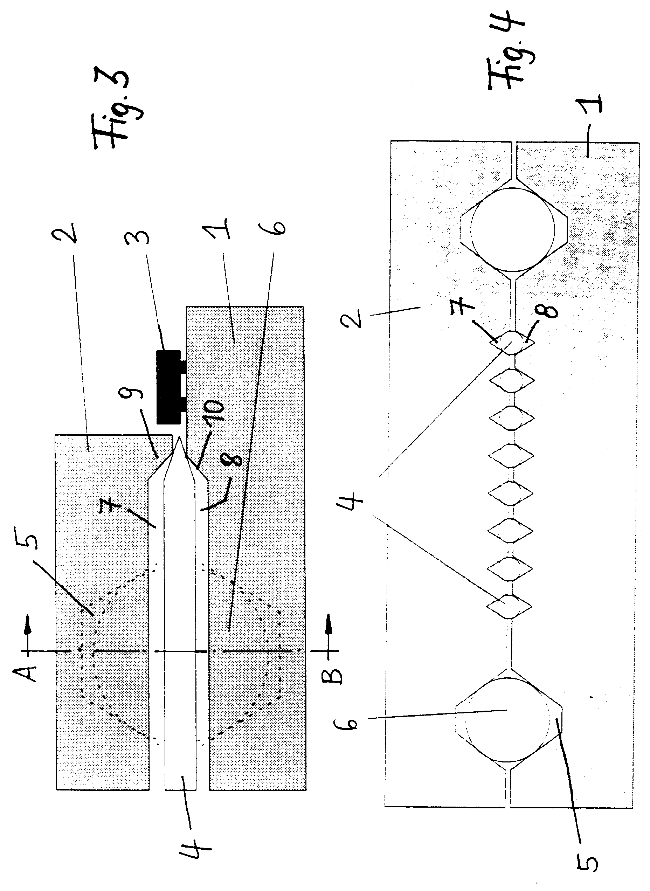

Aus Fig. 3 ist zu erkennen, daß die Axialbewegung des Lichtwellenleiters 4 durch die Anschläge 9 und 10 begrenzt ist. Dadurch wird der gewünschte, exakte Abstand der Spitze des Lichtwellenleiters 4 zum Laserarray erreicht. Die horizontale und vertikale Lage des Lichtwellenleiters 4 wird durch die V-Nuten 7 und 8 sichergestellt.

Aus Fig. 4 ist zu erkennen, wie die V-Nuten 7 und 8 einen Kanal mit rhombusförmigem Querschnitt bilden, in welcher die Lichtwellenleiter 4 in exakter horizontaler und vertikaler Lage angeordnet sind.

Bei einem Ausführungsbeispiel hat es sich als zweckmäßig erwiesen, die Platte 1 und den Deckel 2 aus Siliziumplatten herzustellen, weil sich die V-Nuten 7, 8 und die pyramidenstumpfförmigen Vertiefungen 5 in diesem Werkstoff mit der erforderlichen Genauigkeit und Reproduzierbarkeit durch anisotropes Ätzen herstellen lassen. Es sind aber alle die Werkstoffe verwendbar, mit denen dieses Resultat auch erreichbar ist. Die Kugeln 6 bestanden aus Glas, weil Kugeln aus diesem Werkstoff mit einer Durchmessertoleranz von ± 1 µm erhältlich sind.

Die Herstellung der Vorrichtung kann in der Weise erfolgen, daß Platte 1 und Deckel 2 nach Einfügung der Kugeln dauerhaft miteinander verbunden werden. Danach werden die Lichtwellenleiter 4 bis zu den Anschlägen 9 und 10 in die von den V-Nuten 7, 8 gebildeten Kanäle eingeschoben und dort dadurch fixiert, daß ein Kleber vom Ende der Vorrichtung her in die vom Lichtwellenleiter 4 nicht ausgefüllten Zwickel der V-Nuten 7, 8 eingebracht wird.

## Patentansprüche

1. Vorrichtung zur genau justierten Ankopplung einer Mehrzahl von Lichtwellenleitern an einen Laserarray (3), umfassend eine ebene Platte (1), einen ebenen Deckel (2) und Mittel (5, 6) zur exakten Justierung derselben zueinander, wobei die Platte und der Deckel mit einer gleichen Anzahl V-Nuten (7) versehen sind, die nach dem Zusammenfügen von Platte und Deckel rhombusförmige Kanäle bilden,
**dadurch gekennzeichnet, daß**
a) die dem Laserarray zugewandten Enden der rhombusförmigen Kanäle konisch zulaufen und daß
b) zwischen den Enden der rhombusförmigen Kanäle und dem Laserarray ein Spalt ist, der durch einen Abstand zwischen Platte und Deckel entsteht und durch deren in diesem Bereich ebenen Oberflächen begrenzt ist.

2. Vorrichtung nach Anspruch 1,
dadurch gekennzeichnet, daß die Mittel zur Justage aus wenigstens drei in Platte und Deckel angeordneten kegelstumpfartigen Vertiefungen (5) bestehen, in welchen jeweils eine Kugel (6) angeordnet ist.

3. Vorrichtung nach den Ansprüchen 1 und 2,
dadurch gekennzeichnet, daß Platte (1) und Deckel (2) aus Silizium bestehen, in welchen die Nuten (7, 8) und die Vertiefungen (5) durch anisotropes Ätzen erzeugt sind.

4. Vorrichtung nach den Ansprüchen 1 und 2,
dadurch gekennzeichnet, daß die Kugeln (6) aus Glas bestehen.

## Claims

1. A device for the precisely adjusted coupling of a plurality of optical waveguides to a laser array (3), comprising a flat plate (1), a flat cover (2), and means (5, 6) for their precise adjustment relative to one another, wherein the plate and the cover are provided with an identical number of V-shaped grooves (7) which form rhombic channels following the fining together of plate and cover, characterised in that
a) those ends of the rhombic channels which face towards the laser array taper in conical fashion and
b) between the ends of the rhombic channels and the laser array there is a gap which is formed by a space between the plate and the cover and is delimited by the surfaces of the plate and cover which are flat in this region.

2. A device according to Claim 1, characterised in that the adjusting means consist of at least three truncated-cone-shaped recesses (5) which are arranged in the plate and the cover and each of which contains a ball (6).

3. A device according to Claims 1 and 2, characterised in that plate (1) and cover (2) consist of silicon in which the grooves (7, 8) and the recesses (5) are formed by anisotropic etching.

4. A device according to Claims 1 and 2, characterised in that the balls (6) consist of glass.

## Revendications

1. Dispositif pour coupler de manière ajustée et précise une pluralité de guides d'ondes lumineuses à un réseau de lasers (3), comprenant une plaque plane (1), un couvercle plan (2) et des moyens (5, 6) pour un ajustement exact de ceux-ci, l'un par rapport à l'autre, la plaque et le couvercle étant munis d'un nombre identique de rainures en V (7) qui forment des canaux en forme de losange après assemblage de la plaque et du couvercle, caractérisé en ce que
a) les extrémités tournées vers le réseau de lasers des canaux en forme de losange se prolongent de manière conique et
b) un espace se trouve entre les extrémités des canaux en forme de losange et le réseau de lasers, espace qui est créé par une distance entre la plaque et le couvercle et qui est délimité par leur surfaces planes dans cette zone.

2. Dispositif selon la revendication 1, caractérisé en ce que les moyens d'ajustement se composent d'au moins trois creux (5) en forme de troncs de cône disposés dans la plaque et le couvercle, dans lesquels est disposée à chaque fois une sphère (6).

3. Dispositif selon les revendications 1 et 2, caractérisé en ce que, la plaque (1) et le couvercle (2) sont constitués de silicium, dans lesquels les rainures (7, 8) et les creux (5) sont produits au moyen d'une attaque chimie anisotrope.

4. Dispositif selon les revendications 1 et 2, caractérisé en ce que les sphères (6) sont constituées de verre.
